(19) Europäisches Patentamt / European Patent Office / Office européen des brevets

(11) **EP 3 575 755 B1**

(12) **EUROPÄISCHE PATENTSCHRIFT**

(45) Veröffentlichungstag und Bekanntmachung des Hinweises auf die Patenterteilung:
**25.10.2023   Patentblatt 2023/43**

(21) Anmeldenummer: **18174619.9**

(22) Anmeldetag: **28.05.2018**

(51) Internationale Patentklassifikation (IPC):
***G01F 23/284*** (2006.01)

(52) Gemeinsame Patentklassifikation (CPC):
**G01F 23/284**

(54) **FÜLLSTANDMESSGERÄT MIT OPTIMIERTER ANTENNENSTEUERUNG UND VERFAHREN ZUR FÜLLSTANDMESSUNG**

FILL LEVEL MEASURING DEVICE WITH OPTIMIZED ANTENNA CONTROL AND METHOD FOR LEVEL MEASUREMENT

APPAREIL DE MESURE DE NIVEAU DE REMPLISSAGE À COMMANDE D'ANTENNE OPTIMISÉE ET MÉTHODE DE MESURE DE NIVEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.12.2019   Patentblatt 2019/49**

(73) Patentinhaber: **VEGA Grieshaber KG**
**77709 Wolfach (DE)**

(72) Erfinder: **WELLE, ROLAND**
**77756 Hausach (DE)**

(74) Vertreter: **Maiwald GmbH**
**Elisenhof**
**Elisenstraße 3**
**80335 München (DE)**

(56) Entgegenhaltungen:
**DE-A1-102015 109 463     US-A1- 2004 080 324**
**US-A1- 2009 256 737**

**Beschreibung**

Gebiet der Erfindung

Die Erfindung betrifft Vorrichtungen und Verfahren zur Füllstandmessung, zur Erfassung der Topologie einer Füllgutoberfläche, insbesondere Radarfüllstandmessgeräte, weiterhin eine Verwendung, ein Programmelement und ein computerlesbares Medium.

Hintergrund

Zur Füllstandmessung, beispielsweise in einem Behälter, werden verschiedene Arten von Sensorsystemen eingesetzt. Eine Familie dieser Sensorsysteme sind Radarfüllstandmessgeräte. Diese werden insbesondere eingesetzt, um einen bestimmten Pegel eines Füllguts, z.B. in einem Behälter, anzuzeigen, z.B. um zu bestimmen, ob eine vordefinierte obere oder untere Grenze des Füllstands in dem Behälter erreicht wurde. Der Behälter kann ein Gefäß von beliebiger Form sein. Der Behälter kann auch ein Gerinne, beispielsweise ein Bach- oder Flussbett sein.

Füllstandmessgeräte zur Bestimmung eines Füllstandes unter Verwendung hochfrequenter elektromagnetischer Signale weisen in vielen Fällen eine breitbandig arbeitende Hornantenne auf, welche zur Abstrahlung und/oder zum Empfang der zur Messung verwendeten Signale dient. Breitbandig arbeitende Antennen gewährleisten eine hohe Genauigkeit der Füllstandmessung. Allerdings können derartige Hornantennen aufwändig in der Herstellung sein.

Darüber hinaus weisen diese Antennen eine mitunter nicht tolerierbare Baugröße auf, insbesondere eine größere Länge, welche den Einsatz in beengten Einbausituationen erschweren kann.

Die Druckschrift US 2004 080 324 A1 offenbart ein Füllstandradar mit einer Sende- und Empfangsvorrichtung und einer Antennenvorrichtung, die als Hornantenne ausgebildet ist.

Die US 2009 256 737 A1 offenbart ein Füllstandradar mit einer Sende- und Empfangsvorrichtung und einer Antennenvorrichtung, die als ein Array von Hochfrequenz- und Niederfrequenz-Elementen aufgebaut ist.

Andere Antennen für Füllstandmessgeräte, sogenannte planare Antennen, weisen einen flachen Aufbau auf und sind in einigen Ausführungsformen preisgünstig herzustellen. Allerdings weisen diese Typen von Antennen eine - insbesondere im Vergleich zu Hornantennen - reduzierte Sendebandbreite auf, welche die Genauigkeit der Füllstandmessung beeinträchtigen kann.

Zusammenfassung der Erfindung

Auf diesem Hintergrund es ist Aufgabe der Erfindung, die Nachteile des Standes der Technik wenigstens teilweise zu überwinden, insbesondere eine Vorrichtung zur Verfügung zu stellen, die trotz flacher Bauweise eine hohe Bandbreite aufweist.

Diese Aufgabe wird durch den Gegenstand der unabhängigen Patentansprüche gelöst. Weiterbildungen der Erfindung ergeben sich aus den Unteransprüchen und der folgenden Beschreibung.

Die Erfindung betrifft ein FMCW-Füllstandradar zur Füllstandmessung eines Füllguts, mittels eines Dauerstrichradars. Dabei verwendet ein FMCW-Radar (FMCW: Frequency-Modulated Continuous Wave, oder Dauerstrichradar) ein kontinuierliches hochfrequentes Sendesignal, dessen Frequenz während der Messung geändert wird. Bei einem FMCW-Füllstandradar wird das Sendesignal auf die Oberfläche eines Füllguts gerichtet und die von dort reflektierten Signale erfasst. Eine Auswerteeinheit vergleicht die gesendeten und empfangenen Signale, z.B. bezüglich ihrer Frequenz, und berechnet daraus die Entfernung zu der Oberfläche des Füllguts und daraus wiederum den Füllstand des Füllguts in dem Behälter.

Das FMCW-Füllstandradar weist eine Sendevorrichtung für ein erstes Frequenzband und ein zweites Frequenzband, das von dem ersten Frequenzband verschieden ist, auf. Ferner weist es eine Empfangsvorrichtung für das erste Frequenzband und das zweite Frequenzband auf.

Weiterhin weist das FMCW-Füllstandradar eine Antennenvorrichtung mit einer ersten schmalbandigen Teilantenne auf. Als eine schmalbandige Antenne werden hier Antennen mit einer relativen Bandbreite von kleiner 10 %, insbesondere von kleiner 5 %, bezeichnet. Die relative Bandbreite B ist definiert als

$$B = ( f_o - f_u ) / f_m \qquad (Gl.\ 1)$$

mit:

$f_o$    obere Grenzfrequenz, z.B. bei -14 dB reflektierte Leistung

$f_u$    untere Grenzfrequenz, z.B. bei -14 dB reflektierte Leistung

$f_m$    Mittenfrequenz = $( f_o + f_u ) / 2$

Diese schmalbandige Teilantenne ist eingerichtet, Signale innerhalb des ersten Frequenzbandes von der Sendevorrichtung zu senden, und/oder die von der Oberfläche reflektierten Signale innerhalb des ersten Frequenzbandes zu empfangen und die Signale an die Empfangsvorrichtung weiterzuleiten.

Das FMCW-Füllstandradar weist zusätzlich eine zweite schmalbandige Teilantenne auf, die eingerichtet ist, Signale innerhalb des zweiten Frequenzbandes von der Sendevorrichtung zu senden, und/oder die von der Füllgut-Oberfläche reflektierten Signale innerhalb des zweiten

Frequenzbandes zu empfangen und die Signale an die Empfangsvorrichtung weiterzuleiten.

Erfindungsgemäß sind die Sendevorrichtung, die Empfangsvorrichtung und zumindest eine der Teilantennen zusammen auf einem Radar-System on Chip, RSoC, integriert. Diese Lösung bietet Vorteile bezüglich der Kompaktheit des Systems und kann für bestimmte Ausführungsformen auch Kostenvorteile bringen.

Außerdem weist das FMCW-Füllstandradar eine Steuerungseinheit auf, die eingerichtet ist, um die Sendevorrichtung mit den Signalen innerhalb des ersten Frequenzbandes und innerhalb des zweiten Frequenzbandes zu beaufschlagen, und um die von der Empfangsvorrichtung empfangenen reflektierten Signale innerhalb des ersten und zweiten Frequenzbandes mit den Signalen innerhalb des ersten und zweiten Frequenzbandes von der Sendevorrichtung zu korrelieren.

Das Korrelieren der empfangenen reflektierten Signale kann beispielsweise darin bestehen, die Daten aller empfangenen reflektierten Signale, d.h. sowohl vom ersten Frequenzband als auch vom zweiten Frequenzband, in einem gemeinsamen Speicherbereich abzulegen und diese dann in einer Weise auszuwerten, als ob sie von einer einzigen Antenne stammen würden. Dadurch kann das FMCW-Füllstandradar einen Frequenzbereich senden und empfangen, der aus dem ersten Frequenzband und dem zweiten Frequenzband besteht. Aus diesen Daten kann der Füllstand eines Füllguts bestimmt werden.

Vorteilhafterweise kann mit einem derartigen FMCW-Füllstandradar eine höhere Bandbreite, und damit eine weitaus genauere Messung, erreicht werden als mit schmalbandigen Teilantennen, insbesondere planaren Antennen, nach dem Stand der Technik. Darüberhinaus werden die Vorteile der planaren Antennen beibehalten. So weist dieses FMCW-Füllstandradar einen flachen Aufbau auf. Weiterhin sind derartige Füllstandradare preisgünstig herzustellen. Durch die Kombination zweier schmalbandig arbeitender Antennensysteme und die gemeinsame Auswertung der von diesen erfassten Signalen lässt sich die Bandbreite bei der Messung von Füllständen mit Radar steigern. Hierdurch erhöht sich die Messgenauigkeit und Zuverlässigkeit bei gleichzeitiger Reduktion der Kosten solcher Systeme

In einigen Ausführungsformen sind die erste Teilantenne und die zweite Teilantenne Planarantennen, insbesondere Patchantennen, Schlitzantennen oder SIW-Antennen (Substrate Integrated Waveguide). Es können also handelsübliche - und damit preisgünstige - Teilantennen als Basis für ein breitbandig arbeitendes FMCW-Füllstandradar verwendet werden.

In einigen Ausführungsformen ist das FMCW-Füllstandradar eingerichtet, um mindestens einen Teil der Frequenzen mindestens eines Frequenzbandes mit einer Phasendrehung, einer Verstärkung, einer Abtastratenänderung und/oder einer Interpolation zu versehen. Dabei können diese Maßnahmen, je nach Bedarf, entweder einzeln oder kombiniert angewendet werden.

So kann durch eine Phasendrehung die Auflösung und die Genauigkeit der Füllstandmessung, insbesondere einem Korrelieren der Signale unterschiedlicher Antennen, verbessert werden. Eine Abtastratenänderung ermöglicht, die Genauigkeit der Messung auf die Rahmenbedingungen der Messung - z.B. Entfernung der Füllgutoberfläche von dem Füllstandradar, Art der Energieversorgung, etc. - einzustellen. Dies kann mittels verschiedener Arten von Interpolationen - z.B. linear, quadratisch, oder mit Polynomen höherer Ordnung - weiter verbessert werden.

In einigen Ausführungsformen umfasst das Korrelieren der Signale, sämtliche reflektierten Signale zusammen auszuwerten. Es wird also eine vollständige Messung durch alle Frequenzbänder durchgeführt und anschließend werden sämtliche Messwerte ausgewertet. Als Alternative können die Auswertungen nach der Messung jedes Frequenzbands durchgeführt werden oder auch unmittelbar nach der Erfassung jedes einzelnen Messwerts. Die Wahl der Strategie hängt unter anderem ab von zeitlichen Rahmenbedingungen der Auswertung, z.B. vom Vorliegen von bestimmten Echtzeitbedingungen, von der Rechenleistung oder von der Energieversorgung.

In einer Ausführungsform umfasst das Auswerten eine Bandpassfilterung und/oder eine Spektralanalyse. Durch die Bandpassfilterung können z.B. Störsignale, insbesondere Echos, zumindest teilweise ausgefiltert werden. Durch die Spektralanalyse können vorteilhafterweise bei komplexem Reflektionen mehrere Reflektionsebenen getrennt erkannt werden, beispielsweise wenn oberhalb der Füllgutoberfläche noch eine Zuleitung in den Behälter ragt.

In einigen Ausführungsformen ist die höchste Frequenz des ersten Frequenzbandes kleiner als die niedrigste Frequenz des zweiten Frequenzbandes. Dies wird gewählt, wenn eine im Ergebnis möglichst breitbandige Messung durchgeführt werden soll.

In einigen Ausführungsformen ist das FMCW-Füllstandradar eingerichtet, die Frequenzen jedes Frequenzbandes entweder von der niedrigsten Frequenz des entsprechenden Frequenzbandes zur höchsten Frequenz oder von der höchsten Frequenz des entsprechenden Frequenzbandes zur niedrigsten Frequenz zu durchlaufen.

Beispiele für das erste Frequenzband, das von der ersten Teilantenne gesendet und/oder empfangen wird, könnten Frequenzen zwischen 75 GHz und 78 GHz sein. Beispiele für das zweite Frequenzband, das von der zweiten Teilantenne gesendet und/oder empfangen wird, könnten Frequenzen zwischen 78 GHz und 81 GHz sein. Diese Beispiele sind so gewählt, dass die Frequenzbereiche unmittelbar aneinander anschließen. Weiterhin zeigen diese Beispiele, dass die Teilantennen schmalbandig ausgelegt sind. So beträgt die relative Bandbreite B der ersten Teilantenne des Beispiels, gemäß Gl. 1, etwa 4 %. Die Frequenzen, die üblicherweise verwendet werden, liegen im Bereich zwischen etwa 100 kHz und 500 GHz.

In einigen Ausführungsformen überlappen sich das erste Frequenzband und das zweite Frequenzband teilweise. Dies wird gewählt, wenn bei der Messung bestimmte Frequenzbereiche bevorzugt genutzt werden sollen.

In einigen Ausführungsformen umfasst das FMCW-Füllstandradar weitere Teilantennen, die eingerichtet sind, zumindest ein weiteres Frequenzband von der Sendevorrichtung zu senden, und/oder das reflektierte weitere Frequenzband zu empfangen und an die Empfangsvorrichtung weiterzuleiten.

Mit den oben aufgeführten Beispielen könnte ein drittes Frequenzband, das von der ersten Teilantenne gesendet und/oder empfangen wird, insbesondere Frequenzen zwischen 81 GHz und 84 GHz, umfassen. Es könnten auch noch weitere Frequenzbänder, mit weiteren Teilantennen, verwendet werden, abhängig von den Erfordernissen, z.B. in Bezug auf Genauigkeit und/oder Zuverlässigkeit der Füllstandmessung.

In einigen Ausführungsformen ist das FMCW-Füllstandradar eingerichtet, das Senden jedes Frequenzbandes seriell und zyklisch durchzuführen. Dies könnte durch einen Zyklus Frequenzband 1 - Frequenzband 2 - (gegebenenfalls weitere Frequenzbänder) - Frequenzband 1, usw. realisiert werden. Dies ist insbesondere vorteilhaft, wenn höhere Restriktionen an die Energieversorgung des Füllstandradars vorliegen.

In einigen Ausführungsformen ist das FMCW-Füllstandradar eingerichtet, das Senden jedes Frequenzbandes parallel und zyklisch durchzuführen. Dies könnte durch einen Zyklus Frequenzband 1 ‖ Frequenzband 2 ‖ (gegebenenfalls weitere Frequenzbänder) - Frequenzband 1 ‖ Frequenzband 2 ‖ (gegebenenfalls weitere Frequenzbänder), usw. realisiert werden. ("Parallel" ist abgekürzt durch "‖".) Dies ist insbesondere vorteilhaft, wenn strenge Echtzeitanforderungen an das Füllstandradar vorliegen.

In einigen Ausführungsformen ist das FMCW-Füllstandradar eingerichtet, nach dem Senden jedes Frequenzbandes den Sender kurzzeitig zu deaktivieren. Dies ist insbesondere vorteilhaft, um die Sender zu kühlen und/oder den Energiebedarf weiter zu senken.

In einigen Ausführungsformen ist die Steuerungseinheit eingerichtet, die von der Empfangsvorrichtung empfangenen Signale mit den Signalen von der Sendevorrichtung nach dem Senden des Frequenzbandes oder parallel zu dem Senden des Frequenzbandes zu korrelieren. Auch hier hängt die gewählte Lösung in hohem Maße von den Rahmenbedingungen der Messung ab.

In einigen Ausführungsformen ist mindestens eine der Teilantennen über eine Microstrip-Line, über einen Hohlleiter, und/oder über einen Substrate Integrated Waveguide (SIW) mit der Sendevorrichtung verbunden. Dies eröffnet vorteilhafterweise eine breite Auswahl von Möglichkeiten, das Füllstandradar an vorgegebene geometrischen Rahmenbedingungen anzupassen.

Es kann zudem vorgesehen sein, die von der Teilantenne auf dem RSoC gesendeten und/oder empfangenen Signale mit fokussierenden Elementen, beispielsweise Linsen, Hörnern, weiter zu bündeln, und somit die Messeigenschaften des Radarfüllstandmessgerätes zu verbessern. In einigen Ausführungsformen das ist FMCW-Füllstandradar eingerichtet, mindestens eine der Teilantennen sowohl zum Senden als auch zum Empfangen zu verwenden. Diese Ausführungsformen ermöglichen ein besonders kompaktes Gestalten des Füllstandradars.

Die Erfindung umfasst auch ein Verfahren zur Füllstandmessung, mittels eines FMCW-Füllstandradars, mit den Schritten:

- Senden des ersten Frequenzbandes, mittels der Steuerungseinheit, welche die Sendevorrichtung mit dem ersten Frequenzband beaufschlagt, über die erste schmalbandige Teilantenne;
- Empfangen des reflektierten ersten Frequenzbandes und weiterleiten an die Empfangsvorrichtung;
- Senden des zweiten Frequenzbandes, mittels der Steuerungseinheit, welche die Sendevorrichtung mit dem zweiten Frequenzband beaufschlagt, über die zweite schmalbandige Teilantenne;
- Empfangen des reflektierten zweiten Frequenzbandes und weiterleiten an die Empfangsvorrichtung;
- Korrelieren der von der Empfangsvorrichtung empfangenen Signale des reflektierten ersten und zweiten Frequenzbandes mit dem ersten und zweiten Frequenzband von der Sendevorrichtung, um daraus den Füllstand eines Füllguts zu bestimmen, wobei die Sendevorrichtung, die Empfangsvorrichtung und zumindest eine der Teilantennen zusammen auf einem Radar-System on Chip, RSoC, integriert sind.

Die Erfindung umfasst auch ein Programmelement, welches, wenn es auf der Prozessoreinheit einer Auswerteeinheit oder der Steuerungseinheit ausgeführt wird, das FMCW-Füllstandradar anweist, das oben skizzierte Verfahren durchzuführen.

Die Erfindung umfasst auch ein computerlesbares Medium, auf dem das oben genannte Programmelement gespeichert ist.

Das FMCW-Füllstandradar kann insbesondere verwendet werden zur Messung des Füllstandes von Flüssigkeiten, insbesondere von Wasser, Öl, Säuren, und anderen Chemikalien, bevorzugt mit einer relativen Permittivität zwischen 1,1 und 158, oder von Schüttgut, insbesondere von granulierten oder pulverförmigen Schüttgütern, z.B. Sand, Erz, Mehl, Kunststoffgranulat, Metallpulver, bevorzugt mit einer relativen Permittivität von größer als 1,1.

Kurze Beschreibung der Figuren

Fig. 1a zeigt eine erste Ausführungsform eines Füllstandmessgerätes nach dem Stand der Technik;

Fig. 1b zeigt eine Echokurve, bei welcher ein Füllstandmessgerät mit einer schmalen Bandbreite abstrahlt;

Fig. 1c zeigt eine Echokurve, bei welcher ein Füllstandmessgerät mit einer mit einer höheren Bandbreite abstrahlt;

**Fig. 2a** zeigt schematisch eine Hornantenne;

**Fig. 2b** zeigt beispielhaft eine Übertragungsfunktion einer Hornantenne;

**Fig. 2c** zeigt schematisch eine Patchantenne;

**Fig. 2d** zeigt beispielhaft eine Übertragungsfunktion einer Patchantenne;

**Fig. 2e** zeigt schematisch eine Schlitzantenne;

**Fig. 2f** zeigt beispielhaft eine Übertragungsfunktion einer Schlitzantenne;

**Fig. 3a** zeigt schematisch ein Beispiel für ein erfindungsgemäßes FMCW-Füllstandradar;

**Fig. 3b** bis 3d zeigen beispielhaft Übertragungsfunktionen der Teilantennen;

**Fig. 4** zeigt schematisch einen Betriebsablauf eines FMCW-Füllstandradars;

**Fig. 5** zeigt schematisch einen Zeitverlauf eines FMCW-Füllstandradars;

**Fig. 6a** bis 6c zeigen beispielhaft Echokurven der Teilantennen;

**Fig. 7** zeigt schematisch ein Beispiel einer Auswertung der Signale mehrerer Teilantennen;

**Fig. 8** zeigt ein Beispiel eines erfindungsgemäßen Verfahrens.

Detaillierte Beschreibung von Ausführungsformen

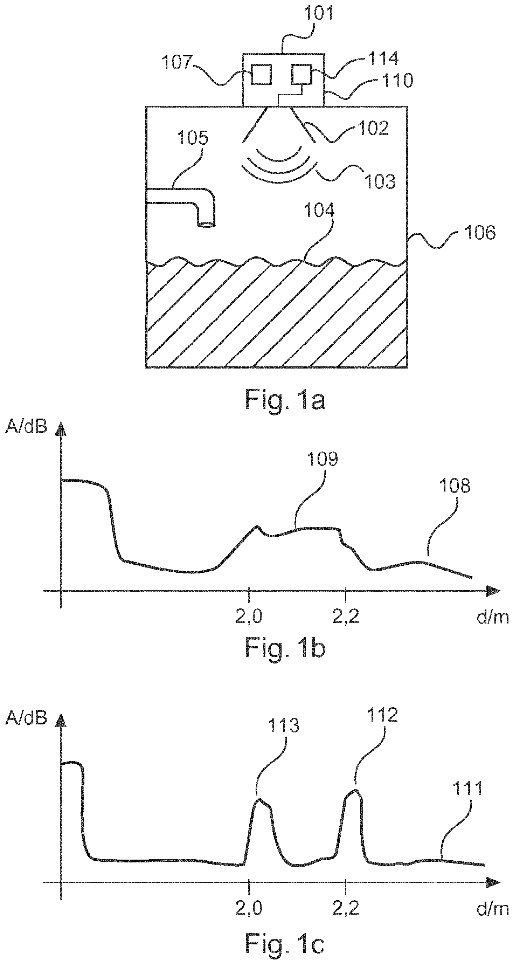

**Fig. 1a** zeigt eine erste Ausführungsform eines Füllstandmessgerätes 101 nach dem Stand der Technik, bei der das Füllstandmessgerät 101 in einem Gefäß oder Gerinne 106 angeordnet ist. In dem Gefäß 106 befindet sich ein Füllgut mit einer Füllgutoberfläche 104. Ferner ragt eine Rohrleitung 105 in das Innere des Gefäßes 106. Das Füllstandmessgerät 101 ist in einem oberen Bereich des Gefäßes 106 angeordnet. Unten an dem Füllstandmessgerät 101 ist eine Antenne 102 - die schematisch als Hornantenne gezeichnet ist - angeordnet. Die Antenne 102 sendet Hochfrequenzsignale 103, nämlich das Messsignal, in Richtung der Füllgutoberfläche 104. Die Hochfrequenzsignale 103 werden von der Füllgutoberfläche 104, von der Rohrleitung 105, von den Wänden des Gefäßes und anderen Gegenständen, die in dem Gefäß 106 angeordnet sind, reflektiert. Das Füllstandmessgerät 101 empfängt die reflektierten Hochfrequenzsignale, verarbeitet diese in einer Auswerteeinheit 107 und einer Schaltung 114, welche eine Prozessoreinheit 120 beinhalten kann. Das Füllstandmessgerät 101 versendet die ausgewerteten Signale über eine Kommunikationsschnittstelle 110, z.B. zu einem Leitstand.

**Fig. 1b** zeigt eine Echokurve 108, bei der das Füllstandmessgerät 101 und/oder die Antenne 102 mit einer schmalen Bandbreite, beispielsweise von 76 bis 77 GHz, abstrahlt. Bei einer Echokurve wird die Intensität der reflektierten Signale (y-Achse) über der errechneten Entfernung (x-Achse) angetragen. Die Auswerteeinheit 107 setzt die empfangenen Signale in eine Echokurve 108 um, welche die Stärke der reflektierten Signale in Abhängigkeit von deren Laufzeit, welche wiederum proportional zur Entfernung ist, widerspiegelt. Die aus einer solchen Messung resultierenden Echos 109 sind mitunter sehr breit, weshalb anhand des Kurvenverlaufes 108 nicht entschieden werden kann, ob das Echo 109 aus der Reflektion an einer oder an mehreren Reflexionsstellen, z.B. an der Füllgutoberfläche 104 oder an der Rohrleitung 105, entstanden ist. Wie aus der Skizze der Echokurve 108 deutlich wird, lassen sich mit dieser Echokurve 108 die Positionen der Füllgutoberfläche 104 oder der Rohrleitung 105

- und somit auch der interessierende Füllstandmesswert - nur sehr ungenau bestimmen.

**Fig. 1c** zeigt eine erste Echokurve, bei welcher ein Füllstandmessgerät mit einer mit einer höheren Bandbreite, beispielsweise von 76 bis 82 GHz, abstrahlt. Aufgrund der höheren Bandbreite der Hochfrequenzsignale 103 werden die von den Reflexionsstellen, d.h. Füllgutoberfläche 104 und Rohrleitung 105, verursachten Echos 112, 113 wesentlich schmaler, was dazu beitragen kann, die Reflexion 113 des Rohres 105 deutlich von der Reflexion 112 der Füllgutoberfläche 104 zu unterscheiden. Insbesondere mit Hilfe weiterer Algorithmen der digitalen Signalverarbeitung und beispielsweise unter Verwendung von Verfahren der Störechobehandlung kann die Reflexion 112 eindeutig als Reflexion von der Füllgutoberfläche 104 erkannt werden. Aufgrund der schmalen Ausprägung des Echos 112 kann auch die Entfernung der Füllgutoberfläche 104 sehr genau bestimmt werden.

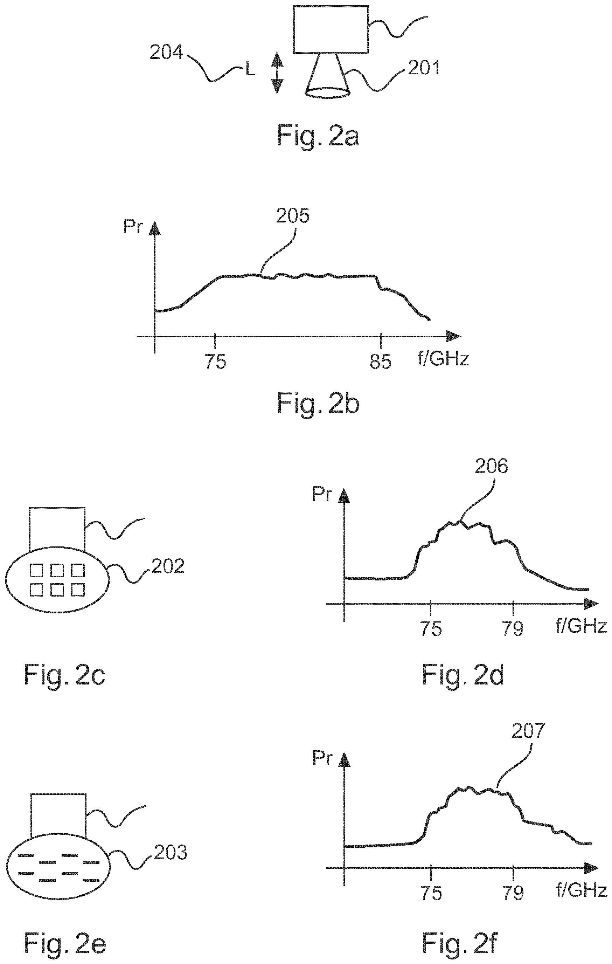

**Fig. 2a** zeigt schematisch eine Hornantenne 201. Eine derartige Hornantenne 201 ist physikalisch bedingt in der Lage, bei entsprechend optimierter Bauweise, Hochfrequenzsignale in einem weiten Frequenzbereich umzusetzen. Die, in **Fig. 2b** abgebildete, zugehörige Übertragungsfunktion 205 verdeutlicht, dass die Antenne Signale zwischen 75 und 85 GHz abstrahlen kann. Nachteilig an dieser Bauform sind, neben den erhöhten Kosten, auch die geometrischen Abmessungen, und hierbei insbesondere die Länge L 204 der Hornantenne, welche einen Einbau in beengten Messsituationen oder kleinen Behältern oftmals erschwert.

**Fig. 2c** zeigt schematisch eine Patchantenne 202. Derartige Antennen gehören zu der Gruppe von sog. planaren Antennen, welche - insbesondere im Vergleich zu Hornantennen - sehr kompakt und preisgünstig hergestellt werden können. Systembedingt zeigen diese Antennentypen aber ein deutlich schmalbandigeres Übertragungsverhalten, wie die in **Fig. 2d** skizzierte beispielhafte Übertragungsfunktion zeigt.

**Fig. 2e** zeigt schematisch ein weiteres Beispiel für eine sog. planare Antenne, nämlich eine Schlitzantenne 203. Deren Übertragungsfunktion ist beispielhaft in **Fig. 2f** skizziert.

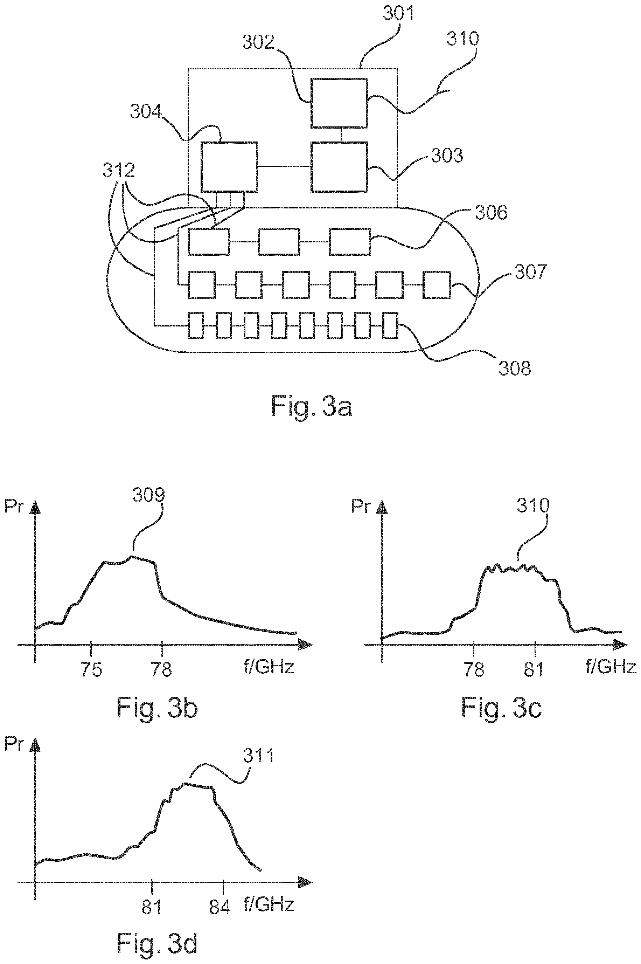

**Fig. 3a** zeigt schematisch ein Beispiel für ein erfindungsgemäßes FMCW-Füllstandradar 301. Das FMCW-Füllstandradar oder Messgerät 301 weist eine Energieversorgungs- und Kommunikationseinheit 302, eine Signalverarbeitungseinheit 303 und ein Radarsystem on Chip (RSoC) 304 auf, welches mindestens eine Sendevorrichtung 304a und ein Empfangsvorrichtung 304b umfasst. Weiterhin weist das FMCW-Füllstandradar eine Antennenvorrichtung 305 auf, welche zumindest zwei - in dem hier gezeichneten Beispiel drei - Teilantennen 306, 307, 308 beinhaltet. Es kann vorgesehen sein, die Teilantennen über geeignete Hochfrequenzverbindungen 312, beispielsweise Microstripleitungen 312, Hohlleiter 312 und/oder Substrate Integrated Waveguide (SIW), mit den Hochfrequenzeingängen und/oder Hochfrequenzausgängen des Radarsystems on Chip 304 zu verbinden. Die erste Teilantenne 306 weist beispielsweise auf eine erste Bandbreite 309 zwischen 75 GHz und 78 GHz auf und ist eine Teilantenne der Antenne 305. Die Teilantennen 306, 307, 308 können in eine Antenne 305 integriert sein. Die **Fig. 3b bis 3d** zeigen beispielhaft Übertragungsfunktionen der Teilantennen 306, 307, 308. Es kann vorgesehen sein, die Hochfrequenzeingänge und/oder die Hochfrequenzausgänge des Radarsystem on Chip 304 während einer Inbetriebnahme über geeignete Hardwaresignale und/oder geeignete Softwarekommandos derart einzustellen, dass deren Arbeitsfrequenzen auf die Übertragungsfunktionen der jeweils angeschlossenen Teilantennen 306, 307, 308 angepasst ist.

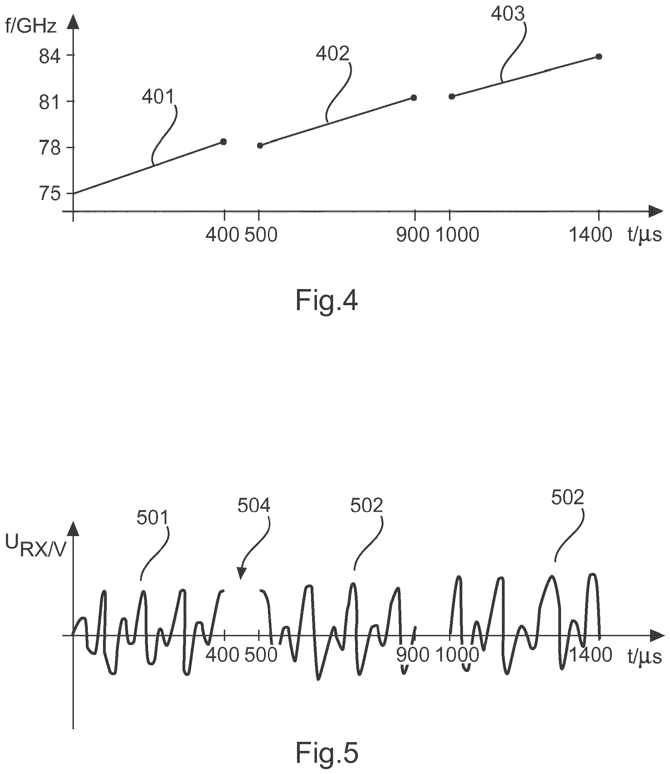

**Fig. 4** zeigt schematisch einen möglichen Betriebsablauf eines FMCW-Füllstandradars 301. Zunächst aktiviert die Signalverarbeitungs- und Steuerungseinheit 303 den ersten Kanal des RSoC 304. Dieser führt im Zeitraum zwischen 0 µs und 400 µs eine erste Füllstandmessung 401 nach dem FMCW-Verfahren, beispielsweise im Frequenzbereich zwischen 75 GHz und 78 GHz, unter Verwendung der entsprechenden Teilantenne 306 durch. Die während dieser Messung erfassten Signale 501 (siehe **Fig. 5)** werden im Speicher der Auswerteeinheit 303 abgelegt. Anschließend deaktiviert die Steuerungseinheit 303 den ersten Kanal des RSoC und aktiviert den zweiten Kanal, welcher im Zeitraum zwischen 500 µs und 900 µs eine zweite Füllstandmessung 402, beispielsweise im Frequenzbereich zwischen 78 GHz und 81 GHz, durchführt. Die während dieser Messung unter Verwendung der entsprechenden Teilantenne 307 erfassten Signale 502 werden ebenfalls im Speicher der Auswerteeinheit 303 abgelegt. In einem letzten Schritt wird nun Kanal 3 des RSoC aktiviert, welcher unter Verwendung der dritten Teilantenne 308 eine weitere Messung 403, beispielsweise im Frequenzbereich zwischen 81 GHz und 84 GHz, durchführt. Die in diesem Zeitraum zwischen 1000 µs und 1400 µs erfassten Signale 503 werden ebenfalls im Speicher der Auswerteeinheit 303 abgelegt.

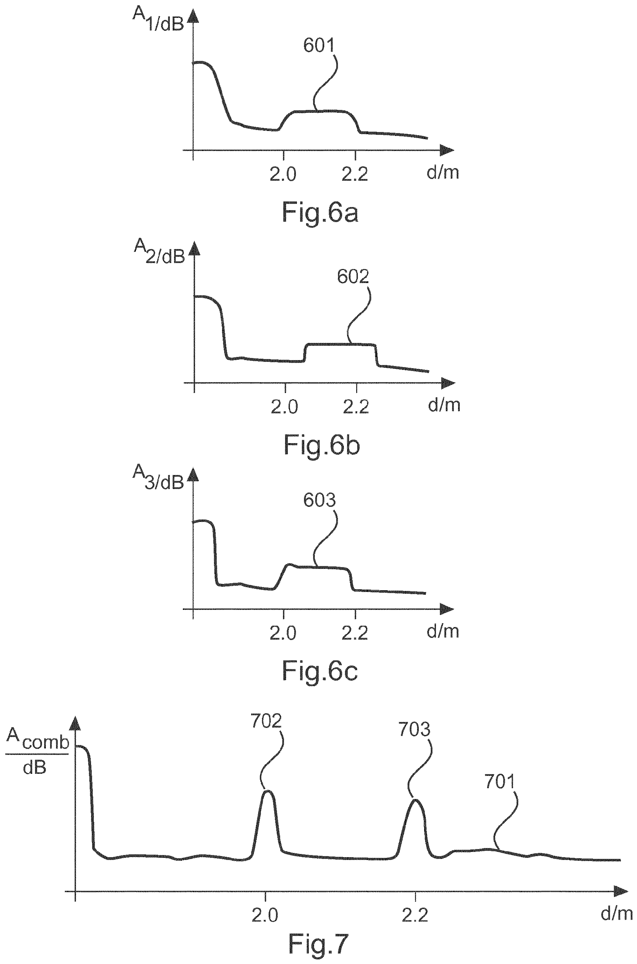

Nach (optionaler) Deaktivierung des RSoC erfolgt in einem weiteren Schritt die Auswertung der erfassten Reflexionssignale 501, 502, 503. In einer Ausführungsform können die Signale 501, 502 und 503 parallel ausgewertet werden, z.B. um die Rechenzeit zu verkürzen. In einer Ausführungsform kann die Auswertung auch zwischen zwei Messungen 401, 402, 403 stattfinden. Die sich ergebenden Echokurven sind in **Fig. 6a bis 6c** dargestellt, wobei die Echokurve 601 aus der Signalen 501, die Echokurve 602 aus den Signalen 502 und die Echokurve 603 aus den Signalen 503 ermittelt werden kann. Die sich ergebenden Verläufe ähneln denen der Echokurve 108 der **Fig. 1b**, da jede der Teilmessungen schmalbandig ist, d.h. in diesem Beispiel nur eine Bandbreite von 3 GHz zur Erfassung der Reflexionsverhältnisse verwendet. Es kann auch vorgesehen sein, diesen Betriebsmodus beizubehalten, um über redundante Messungen und Auswertungen die Zuverlässigkeit in sicherheitskritischen Anlagen zu erhöhen. Es kann auch vorgesehen sein, diesen Messablauf beizubehalten, um die Messwiederholrate zu erhöhen.

**Fig. 7** zeigt schematisch ein Beispiel einer Auswertung der Signale mehrerer Teilantennen 306, 307, 308, unter Verwendung der Signale 501, 502, 503 von **Fig. 5.** Hierbei werden die Teilsignale 501, 502, 503 im Speicher zunächst zusammengeführt, und als ein Signal, das von einer einzigen - jetzt breitbandigen - Antenne stammt, betrachtet. Dieses Signal, welches nun die etwa dreifache Anzahl an Werten aufweist, wird als von einer einzigen Antenne kommend betrachtet und einer digitalen Auswertung, insbesondere mittels einer Fensterung und einer Spektralanalyse, z.B. mittels FFT (Fast Fourier Transform), zugeführt.

Es kann vorgesehen sein, in Abhängigkeit von der Start- und Stoppfrequenz und/oder der Steigung der Einzelsweeps 401, 402, 403 eine Phasendrehung zumindest eines der Teilsignale 501, 502, 503, eine Verstärkung, eine Abtastratenänderung und/oder eine Interpolation vorzusehen, um eine stetige Fortsetzung der Signale am Übergangsbereich 504 zu erreichen. Im vorliegenden Ausführungsbeispiel ist die Stoppfrequenz eines ersten Sweeps 401 gleich der Startfrequenz 402 eines zweiten Sweeps bei gleichzeitig identischer Steigung, weshalb allenfalls eine Pegelangleichung aufgrund unterschiedlicher Dämpfungen der Teilantennen 306, 307, 308 notwendig wird.

Die auf diese Weise erhaltene Echokurve 701 entspricht im Prinzip der in **Fig. 1c** dargestellten - breitbandigen - Echokurve 111, weshalb insbesondere die Reflektion 702 der Rohrleitung 105 deutlich von der Reflexion 703 der Füllgutoberfläche 104 unterschieden werden kann.

Es kann auch vorgesehen sein, die zumindest zwei Teilantennen und somit die zumindest zwei Radarkanäle gleichzeitig zu betreiben. Die sich ergebenden Empfangssignale 501, 502 sind aufgrund der maximal von einem FMCW System verarbeitbaren Frequenzunterschiede im Wesentlichen voneinander separiert und ansonsten identisch mit denen der **Fig. 5**.

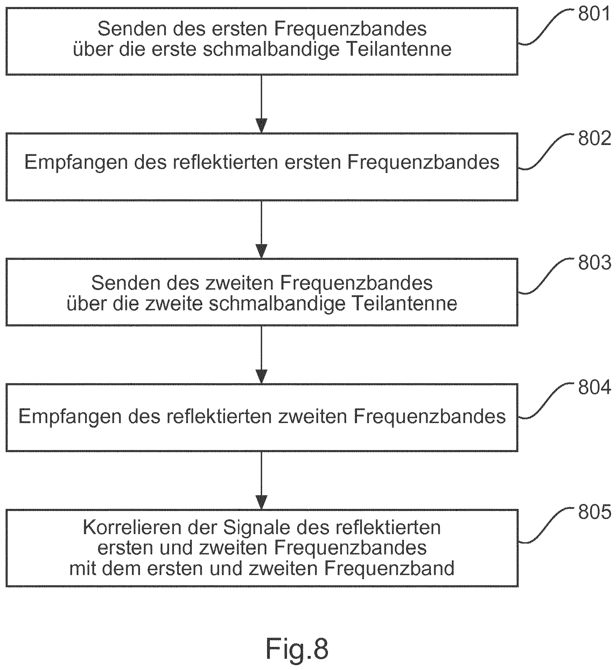

**Fig. 8** zeigt ein Beispiel eines erfindungsgemäßen Verfahrens. In einem ersten Schritt 801 wird das erste Frequenzband, über die erste schmalbandige Teilantenne 306, gesendet. In einem nächsten Schritt 802 werden die Signale des reflektierten ersten Frequenzbandes empfangen und beispielsweise in einem Teil des Speichers der Schaltung 114 gespeichert. In dem Schritt 803 wird das zweite Frequenzband, über die zweite schmalbandige Teilantenne 307, gesendet. In einem nächsten Schritt 804 werden die Signale des reflektierten ersten Frequenzbandes empfangen und beispielsweise in einem anderen Teil des Speichers der Schaltung 114 gespeichert. In einem Schritt 805 werden die Signale des reflektierten ersten und zweiten Frequenzbandes mit dem ersten und zweiten Frequenzband korreliert. Hierbei werden die Teilsignale 501, 502, und gegebenenfalls 503, im Speicher zunächst zusammengeführt, und als ein Signal, das von einer einzigen - breitbandigen - Antenne stammt, betrachtet. Dieses Signal, welches nun die etwa zweifache, ggf. dreifache, Anzahl an Werten aufweist, wird als von einer einzigen Antenne kommend betrachtet und einer digitalen Auswertung, insbesondere mittels einer Fensterung und einer Spektralanalyse, z.B. mittels FFT (Fast Fourier Transform), zugeführt.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschrän-kungen anzusehen.

Liste der Bezugzeichen

101 Füllstandmessgerät
102 Antenne
103 Hochfrequenzsignale, Messsignal
104 Füllgutoberfläche, Reflexionsstelle
105 Gefäß oder Gerinne
106 Rohrleitung
107 Auswerteeinheit
108, 111 Echokurven
109, 112, 113 reflektierte Signale
110 Kommunikationsschnittstelle
114 Schaltung
120 Prozessoreinheit
201 Hornantenne
202 Patchantenne
203 Schlitzantenne
205 Übertragungsfunktion
206 Übertragungsverhalten

301 Füllstandmessgerät, FMCW-Füllstandradar
302 Kommunikationseinheit
303 Auswerteeinheit
304 Radarsystem on Chip (RSoC)
304a Sendevorrichtung
304b Empfangsvorrichtung
305 Antenne
306, 307, 308 Teilantennen
309, 310, 311 Bandbreite der Teilantennen
401, 402, 403 Messungen, Einzelsweeps
501, 502, 503 reflektierte Signale der Teilantennen
504 Übergangsbereich
601 .. 603 Echokurven der Teilantennen
701 korrelierte Echokurve der Teilantennen
702, 703 reflektierte und korrelierte Signale
802 .. 805 Schritte des Verfahrens

**Patentansprüche**

1.　Frequency-Modulated Continuous Wave-Füllstandradar, FMCW-Füllstandradar, (301) zur Füllstandmessung eines Füllguts, mittels eines Dauerstrichradars, aufweisend:

eine Sendevorrichtung für ein erstes Frequenzband und ein zweites Frequenzband, das von dem ersten Frequenzband verschieden ist, eine Empfangsvorrichtung für das erste Frequenzband und das zweite Frequenzband, eine Antennenvorrichtung (305)

mit einer ersten schmalbandigen Teilantenne (306), die eingerichtet ist, Signale innerhalb des ersten Frequenzbandes von der Sendevorrichtung zu senden, und/oder die von der Oberfläche (104) reflektierten Signale innerhalb des ersten Frequenzbandes zu empfangen und die Signale an die Empfangsvorrichtung weiterzuleiten, und mit einer zweiten schmalbandigen Teilantenne (307), die eingerichtet ist, Signale innerhalb des zweiten Frequenzbandes von der Sendevorrichtung zu senden, und/oder die von der Oberfläche (104) reflektierten Signale innerhalb des zweiten Frequenzbandes zu empfangen und die Signale an die Empfangsvorrichtung weiterzuleiten, wobei die Sendevorrichtung, Empfangsvorrichtung und zumindest eine der Teilantennen zusammen auf einem Radar-System on Chip, RSoC, integriert sind, und

eine Steuerungseinheit (303), die eingerichtet ist,

um die Sendevorrichtung mit den Signalen innerhalb des ersten Frequenzbandes und innerhalb des zweiten Frequenzbandes zu beaufschlagen, und

um die von der Empfangsvorrichtung empfangenen reflektierten Signale innerhalb des ersten und zweiten Frequenzbandes mit den Signalen innerhalb des ersten und zweiten Frequenzbandes von der Sendevorrichtung zu korrelieren,

so dass das FMCW-Füllstandradar (301) einen Frequenzbereich senden und empfangen kann, der aus dem ersten Frequenzband und dem zweiten Frequenzband besteht, und daraus den Füllstand eines Füllguts bestimmen kann.

2. FMCW-Füllstandradar (301) nach Anspruch 1, wobei die erste Teilantenne (306) und die zweite Teilantenne (307) Planarantennen, insbesondere Patchantennen, Schlitzantennen oder Substrate Integrated Waveguide-Antennen, SIW-Antennen, sind.

3. FMCW-Füllstandradar (301) nach einem der vorangehenden Ansprüche, wobei das FMCW-Füllstandradar (301) eingerichtet ist, um mindestens einen Teil der Frequenzen mindestens eines Frequenzbandes mit einer Phasendrehung, einer Verstärkung, einer Abtastratenänderung und/oder einer Interpolation zu versehen.

4. FMCW-Füllstandradar (301) nach einem der vorangehenden Ansprüche, wobei das Korrelieren der Signale umfasst, sämtliche reflektierten Signale zusammen auszuwerten.

5. FMCW-Füllstandradar (301) nach Anspruch 4, wobei das Auswerten eine Bandpassfilterung und/oder eine Spektralanalyse umfasst.

6. FMCW-Füllstandradar (301) nach einem der vorangehenden Ansprüche, wobei die höchste Frequenz des ersten Frequenzbandes kleiner ist als die niedrigste Frequenz des zweiten Frequenzbandes, oder sich das erste Frequenzband und das zweite Frequenzband teilweise überlappen.

7. FMCW-Füllstandradar (301) nach einem der vorangehenden Ansprüche, wobei das FMCW-Füllstandradar (301) weitere Teilantennen (308) umfasst, die eingerichtet sind, zumindest ein weiteres Frequenzband von der Sendevorrichtung zu senden, und/oder das reflektierte weitere Frequenzband zu empfangen und an die Empfangsvorrichtung weiterzuleiten.

8. FMCW-Füllstandradar (301) nach einem der vorangehenden Ansprüche, wobei das FMCW-Füllstandradar (301) eingerichtet ist, das Senden jedes Frequenzbandes seriell und zyklisch oder parallel und zyklisch durchzuführen.

9. FMCW-Füllstandradar (301) nach einem der vorangehenden Ansprüche, wobei die Steuerungseinheit (303) eingerichtet ist, die von der Empfangsvorrichtung empfangenen Signale mit den Signalen von der Sendevorrichtung nach dem Senden des Frequenzbandes oder parallel zu dem Senden des Frequenzbandes zu korrelieren.

10. FMCW-Füllstandradar (301) nach einem der vorangehenden Ansprüche, wobei das FMCW-Füllstandradar (301) eingerichtet ist, mindestens eine der Teilantennen (306, 307, 308) sowohl zum Senden als auch zum Empfangen zu verwenden.

11. Verfahren zur Füllstandmessung mittels eines FMCW-Füllstandradars (101) nach einem der vorangehenden Ansprüche, mit den Schritten:

    - Senden des ersten Frequenzbandes, mittels der Steuerungseinheit (303), welche die Sendevorrichtung mit dem ersten Frequenzband beaufschlagt, über die erste schmalbandige Teilantenne (306);
    - Empfangen des reflektierten ersten Frequenzbandes und weiterleiten an die Empfangsvorrichtung;
    - Senden des zweiten Frequenzbandes, mittels der Steuerungseinheit (303), welche die Sendevorrichtung mit dem zweiten Frequenzband beaufschlagt, über die zweite schmalbandige Teilantenne (307);
    - Empfangen des reflektierten zweiten Frequenzbandes und weiterleiten an die Empfangsvorrichtung;
    - Korrelieren der von der Empfangsvorrichtung empfangenen Signale des reflektierten ersten und zweiten Frequenzbandes mit dem ersten und zweiten Frequenzband von der Sendevorrichtung, um daraus den Füllstand eines Füllguts zu bestimmen, wobei die Sendevorrichtung, die Empfangsvorrichtung und zumindest eine der Teilantennen zusammen auf einem Radar-System on Chip, RSoC, integriert sind.

12. Programmelement, welches, wenn es auf der Prozessoreinheit (120) einer Auswerteeinheit (107) oder der Steuerungseinheit (303) ausgeführt wird, das FMCW-Füllstandradar (301) nach einem der Ansprüche 1 bis 10 anweist, das Verfahren nach Anspruch 11 durchzuführen.

13. Computerlesbares Medium, auf dem ein Programmelement nach Anspruch 12 gespeichert ist.

14. Verwendung einer FMCW-Füllstandradar (301) nach einem der Ansprüche 1 bis 10 zur Messung des Füllstandes (104)

von Flüssigkeiten, insbesondere von Wasser, Öl, Säuren, und anderen Chemikalien, bevorzugt mit einer relativen Permittivität zwischen 1,1 und 158, oder
von Schüttgut, insbesondere von granulierten oder pulverförmigen Schüttgütern, z.B. Sand, Erz, Mehl, Kunststoffgranulat, Metallpulver, bevorzugt mit einer relativen Permittivität von größer als 1,1.

**Claims**

1. A Frequency-Modulated Continuous Wave fill level radar, FMCW fill level radar (301), for fill level measurement of a product by means of a continuous wave radar, comprising:

   a transmitting device for a first frequency band and a second frequency band that is different from the first frequency band,
   a receiving device for the first frequency band and the second frequency band,
   an antenna device (305)

   comprising a first narrowband subantenna (306) adapted to transmit signals within the first frequency band from the transmitting device and/or to receive the signals reflected from the surface (104) within the first frequency band and to forward the signals to the receiving device, and
   comprising a second narrowband subantenna (307) adapted to transmit signals within the second frequency band from the transmitting device, and/or to receive the signals reflected from the surface (104) within the second frequency band and to forward the signals to the receiving device, wherein the transmitting device, the receiving device and at least one of the subantennas are integrated together on a Radar System on Chip, RSoC, and

   a control unit (303) that is configured

   to apply the signals within the first frequency band and within the second frequency band to the transmitting device, and
   to correlate the reflected signals within the first and second frequency bands received from the receiving device with the signals within the first and second frequency bands from the transmitting device,

   so that the FMCW fill level radar (301) can transmit and receive a frequency range consisting of the first frequency band and the second frequency band, and determine the fill level of a product therefrom.

2. The FMCW fill level radar (301) according to claim 1, wherein the first subantenna (306) and the second subantenna (307) are planar antennas, in particular patch antennas, slot antennas or Substrate Integrated Waveguide antennas, SIW antennas.

3. The FMCW fill level radar (301) according to any one of the preceding claims,
   wherein the FMCW fill level radar (301) is configured to provide at least a portion of the frequencies of at least one frequency band with a phase rotation, a gain, a sampling rate change, and/or an interpolation.

4. The FMCW fill level radar (301) according to any one of the preceding claims,
   wherein correlating the signals comprises evaluating all reflected signals together.

5. The FMCW fill level radar (301) according to claim 4, wherein the evaluating comprises bandpass filtering and/or spectral analysis.

6. The FMCW fill level radar (301) according to any one of the preceding claims,

   wherein the highest frequency of the first frequency band is less than the lowest frequency of the second frequency band, or
   the first frequency band and the second frequency band partially overlap.

7. The FMCW fill level radar (301) according to any one of the preceding claims,
   wherein the FMCW fill level radar (301) comprises further subantennas (308), which are configured to transmit at least one further frequency band from the transmitting device, and/or to receive and forward the reflected further frequency band to the receiving device.

8. The FMCW fill level radar (301) according to any one of the preceding claims,
   wherein the FMCW fill level radar (301) is configured to perform the transmission of each frequency band serially and cyclically or in parallel and cyclically.

9. The FMCW fill level radar (301) according to any one of the preceding claims,
   wherein the control unit (303) is configured to correlate the signals received from the receiving device with the signals from the transmitting device after the transmission of the frequency band or in parallel with the transmission of the frequency band.

10. The FMCW fill level radar (301) according to any one of the preceding claims,
wherein the FMCW fill level radar (301) is configured to use at least one of the subantennas (306, 307, 308) for both transmitting and receiving.

11. A method of fill level measurement using an FMCW fill level radar (101) according to any one of the preceding claims, comprising the steps of:

- transmitting the first frequency band, by means of the control unit (303) which applies the first frequency band to the transmitting device, via the first narrowband subantenna (306);
- receiving the reflected first frequency band and forwarding it to the receiving device;
- transmitting the second frequency band, by means of the control unit (303) which applies the second frequency band to the transmitting device, via the second narrowband subantenna (307);
- receiving the reflected second frequency band and forwarding it to the receiving device;
- correlating the signals of the reflected first and second frequency bands received from the receiving device with the first and second frequency bands from the transmitting device to determine therefrom the fill level of a product, wherein the transmitting device, the receiving device and at least one of the subantennas are integrated together on a radar system on chip, RSoC.

12. A program element which, when executed on the processing unit (120) of an evaluation unit (107) or the control unit (303), instructs the FMCW fill level radar (301) according to any one of claims 1 to 10 to perform the method according to claim 11.

13. A computer-readable medium on which is stored a program element according to claim 12.

14. Use of an FMCW fill level radar (301) according to any one of claims 1 to 10 for measuring the fill level (104).

of liquids, particularly water, oil, acids, and other chemicals, preferably with a relative permittivity between 1.1 and 158, or
of bulk material, in particular granulated or powdered bulk material, e.g. sand, ore, flour, plastic granules, metal powder, preferably with a relative permittivity of greater than 1.1.

**Revendications**

1. Radar à onde continue à fréquence modulée de niveau de remplissage (radar FMCW - Frequency-Modulated Continuous Wave) de niveau de remplissage, (301), destiné à la mesure du niveau de remplissage d'un produit de remplissage, au moyen d'un radar à émission continue, comportant :

un dispositif d'émission pour une première bande de fréquence et une seconde bande de fréquence qui est différente de la première bande de fréquence,
un dispositif de réception pour la première bande de fréquence et la seconde bande de fréquence,
un dispositif d'antenne (305)

avec une première antenne partielle (306) à bande étroite, qui est conçue pour émettre des signaux situés dans la première bande de fréquence depuis le dispositif d'émission, et/ou recevoir les signaux situés dans la première bande de fréquence qui sont réfléchis par la surface (104) et transmettre les signaux au dispositif de réception, et
avec une seconde antenne partielle (307) à bande étroite, qui est conçue pour émettre des signaux situés dans la seconde bande de fréquence depuis le dispositif d'émission, et/ou recevoir les signaux situés dans la seconde bande de fréquence qui sont réfléchis par la surface (104) et transmettre les signaux au dispositif de réception,
dans lequel le dispositif d'émission, le dispositif de réception et au moins une des antennes partielles sont intégrés ensemble sur un système de radar sur une puce (RSoC - Radar System on Chip), et

une unité de commande (303) qui est conçue pour

fournir les signaux situés dans la première bande de fréquence et dans la seconde bande de fréquence au dispositif d'émission, et
mettre en corrélation les signaux réfléchis situés dans la première et la seconde bande de fréquence reçus par le dispositif de réception avec les signaux situés dans la première et la seconde bande de fréquence du dispositif d'émission,

de telle sorte que le radar FMCW de niveau de remplissage (301) peut émettre et recevoir une plage de fréquence qui est constituée de la première bande de fréquence et de la seconde bande de fréquence et peut en déduire le niveau de remplissage d'un produit de remplissage.

2. Radar FMCW de niveau de remplissage (301) selon la revendication 1,
dans lequel la première antenne partielle (306) et la seconde antenne partielle (307) sont des antennes planaires, en particulier des antennes patch, des antennes à fente ou des antennes à guide d'ondes intégré au substrat, (antennes SIW - Substrate-Integrated Waveguide) .

3. Radar FMCW de niveau de remplissage (301) selon l'une des revendications précédentes,
dans lequel le radar FMCW de niveau de remplissage (301) est conçu pour appliquer une rotation de phase, une amplification, une modification de taux d'échantillonnage et/ou une interpolation à au moins une partie des fréquences d'au moins une bande de fréquence.

4. Radar FMCW de niveau de remplissage (301) selon l'une des revendications précédentes,
dans lequel la mise en corrélation des signaux comprend l'évaluation de tous les signaux réfléchis ensemble.

5. Radar FMCW de niveau de remplissage (301) selon la revendication 4,
dans lequel l'évaluation comprend un filtrage passe-bande et/ou une analyse spectrale.

6. Radar FMCW de niveau de remplissage (301) selon l'une des revendications précédentes,

dans lequel la fréquence la plus élevée de la première bande de fréquence est inférieure à la fréquence la plus faible de la seconde bande de fréquence, ou
la première bande de fréquence et la seconde bande de fréquence se chevauchent partiellement.

7. Radar FMCW de niveau de remplissage (301) selon l'une des revendications précédentes,
dans lequel le radar FMCW de niveau de remplissage (301) comprend d'autres antennes partielles (308), qui sont conçues pour émettre au moins une autre bande de fréquence depuis le dispositif d'émission et/ou recevoir l'autre bande de fréquence réfléchie et la transmettre au dispositif de réception.

8. Radar FMCW de niveau de remplissage (301) selon l'une des revendications précédentes,
dans lequel le radar FMCW de niveau de remplissage (301) est conçu pour effectuer l'émission de chaque bande de fréquence en série et de manière cyclique ou en parallèle et de manière cyclique.

9. Radar FMCW de niveau de remplissage (301) selon l'une des revendications précédentes,
dans lequel l'unité de commande (303) est conçue pour mettre en corrélation les signaux reçus par le dispositif de réception avec les signaux du dispositif d'émission après l'émission de la bande de fréquence ou parallèlement à l'émission de la bande de fréquence.

10. Radar FMCW de niveau de remplissage (301) selon l'une des revendications précédentes,
dans lequel le radar FMCW de niveau de remplissage (301) est conçu pour utiliser au moins une des antennes partielles (306, 307, 308) aussi bien pour l'émission que pour la réception.

11. Procédé de mesure de niveau de remplissage au moyen d'un radar FMCW de niveau de remplissage (101) selon l'une des revendications précédentes, comportant les étapes :

- émission de la première bande de fréquence, au moyen de l'unité de commande (303), qui fournit la première bande de fréquence au dispositif d'émission, par le biais de la première antenne partielle (306) à bande étroite ;
- réception de la première bande de fréquence réfléchie et transmission au dispositif de réception ;
- émission de la seconde bande de fréquence, au moyen de l'unité de commande (303), qui fournit la seconde bande de fréquence au dispositif d'émission, par le biais de la seconde antenne partielle (307) à bande étroite ;
- réception de la seconde bande de fréquence réfléchie et transmission au dispositif de réception ;
- mise en corrélation des signaux de la première et la seconde bande de fréquence réfléchies, reçus par le dispositif de réception, avec la première et la seconde bande de fréquence du dispositif d'émission pour en déduire le niveau de remplissage d'un produit de remplissage, dans lequel le dispositif d'émission, le dispositif de réception et au moins une des antennes partielles sont intégrés ensemble sur un système de radar sur une puce, RSoC (Radar System on Chip).

12. Élément de programme qui, quand il est exécuté sur l'unité de traitement (120) d'une unité d'évaluation (107) ou l'unité de commande (303), ordonne au radar FMCW de niveau de remplissage (301) selon l'une des revendications 1 à 10 d'exécuter la méthode selon la revendication 11.

13. Support lisible par ordinateur, sur lequel est enregistré un élément de programme selon la revendication 12.

**14.** Utilisation d'un radar FMCW de niveau de remplissage (301) selon l'une des revendications 1 à 10 pour mesurer le niveau de remplissage (104)

de liquides, en particulier d'eau, d'huile, d'acides et d'autres substances chimiques, de préférence avec une permittivité relative comprise entre 1,1 et 158, ou

de produits de remplissage, en particulier de produits de remplissage granulés ou pulvérulents, par exemple de sable, de minerai, de farine, de granulés plastiques, de poudre métallique, de préférence avec une permittivité relative supérieure à 1,1.

Fig. 1a

Fig. 1b

Fig. 1c

Fig. 2a

Fig. 2b

Fig. 2c

Fig. 2d

Fig. 2e

Fig. 2f

Fig. 3a

Fig. 3b

Fig. 3c

Fig. 3d

Fig.4

Fig.5

Fig.6a

Fig.6b

Fig.6c

Fig.7

801 ⌐ Senden des ersten Frequenzbandes
über die erste schmalbandige Teilantenne

802 ⌐ Empfangen des reflektierten ersten Frequenzbandes

803 ⌐ Senden des zweiten Frequenzbandes
über die zweite schmalbandige Teilantenne

804 ⌐ Empfangen des reflektierten zweiten Frequenzbandes

805 ⌐ Korrelieren der Signale des reflektierten
ersten und zweiten Frequenzbandes
mit dem ersten und zweiten Frequenzband

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004080324 A1
- US 2009256737 A1